# EUROPÄISCHE PATENTSCHRIFT

(11) **EP 1 052 080 B1**
(45) Veröffentlichungstag und Bekanntmachung des Hinweises auf die Patenterteilung: **27.11.2002**
(21) Anmeldenummer: 00108517.4
(22) Anmeldetag: 19.04.2000
(51) Int. Cl.: B29C 51/44, B29C 51/26

(54) **Verfahren zum Bewegen eines Schwenktisches in einer Vorrichtung zum Formen und Ausstanzen von Behältern aus einer thermoplastischen Kunststofffolie und Vorrichtung zur Durchführung des Verfahrens**
Method for moving a tilting table in a apparatus for forming and punching out containers made of a thermoplastic foil and apparatus for carrying out the method
Procédé pour déplacer une table basculante dans un dispositif de formage et de découpage de récipients moulés à partir d'une feuille thermoplastique et dispositif pour sa mise en oeuvre

(30) Priorität: 11.05.1999 DE 19921668
(43) Veröffentlichungstag der Anmeldung: 15.11.2000
(73) Patentinhaber: Illig, Adolf Maschinenbau GmbH & Co., 74081 Heilbronn (DE)
(72) Erfinder: Karbach, Helmut, 74172 Neckarsulm (DE)

(56) Entgegenhaltungen:
- DE-A- 3 346 628
- DE-A- 19 710 475
- US-A- 6 135 756

## Beschreibung

Die Erfindung betrifft ein Verfahren zum Bewegen eines Schwenktisches in einer Vorrichtung zum Formen und Ausstanzen von Behältern nach der Gattung des Hauptanspruches sowie eine Vorrichtung zur Durchführung des Verfahrens.

Aus der DE 33 46 628 C 2 ist es bekannt, den Formtisch einer Vorrichtung zum Tiefziehen von Behältern aus einer thermoplastischen Kunststofffolie als Schwenktisch auszubilden. Dies ermöglicht das Schwenken der unteren Formwerkzeughälfte mit den geformten und ausgestanzten Behältern in eine Abgabestellung, in der die Behälter aus den Tiefziehformen ausgestoßen werden, vorzugsweise direkt in Stapelrinnen. Ein vertikaler Abwärtshub vor dem Schwenken des Schwenktisches in die Stapelstellung ist aus zweierlei Gründen erforderlich. Zum einen würde eine Werkzeugkante der unteren Werkzeughälfte in Kollision mit der oberen starren Werkzeughälfte geraten. Das Stanzen muss zudem in jedem Fall bei vertikaler Bewegung der beiden Werkzeughälften zueinander erfolgen, um die beiden Werkzeuge zueinander zu führen.
Der vertikale Bewegungsablauf des Schwenktisches erfolgt von Kurvenscheiben aus, von je einer Kurvenscheibe für die Aufwärtsbewegung und je einer Kurvenscheibe für die Abwärtsbewegung, sowie über einen Kniehebel und ein Hebelgestänge. Beide Kurvenscheiben müssen exakt aufeinander abgestimmt sein, was aufwendige Berechnungen und eine teuere Fertigung und eine genaue Montage zur Folge hat. Das Schwenken des Schwenktisches erfolgt über eine dritte Kurvenscheibe und über eine Lasche, die am Formtisch angreift. Der Schwenkpunkt des Schwenktisches ist gleichzeitig Anlenkpunkt des Kniehebels und sitzt in einem geführten Lager. Das bedeutet, dass der Schwenkpunkt und damit die Lagereinheiten während eines Taktes eine lineare Bewegung auf und ab ausführen. Energiemäßig hat dies zur Folge, dass der Kniehebelantrieb eine entsprechende Arbeit bei jedem Hub aufbringen und bei der Abwärtsbewegung diese Arbeit wieder vernichtet werden muss. Es entstehen Beschleunigungs- und Bremskräfte, die auf die Bauteile einwirken und deren Verschleißverhalten beeinflussen.

Ein anderes Problem besteht im Beschleunigen und Abbremsen des Schwenktisches allein vom Schwenken her betrachtet. Insbesondere in Figur 3 der DE 33 46 628 C 2 sieht man den Antrieb für die Schwenkbewegung und die Bauteile, die die Kräfte der bewegten Massen aufnehmen müssen. Man wird zwar versuchen, den Schwenkpunkt des Schwenktisches in den Schwerpunkt der Einheit Schwenktisch mit unterer Werkzeughälfte zu legen. Dies gelingt aber schon deshalb nicht immer, weil das Formwerkzeug auswechselbar ist und eine unterschiedliche Gestaltung aufweist je nach Form und Anzahl der herzustellenden Behälter pro Nutzen. Sein Gewicht ist also unterschiedlich, was die Lage des Schwerpunktes beeinflusst. Aber selbst wenn man im Schwerpunkt schwenkt, sind hohe dynamische Kräfte in den Endlagen aufzufangen. Die höchsten Kräfte treten auf beim Schwenken des Schwenktisches in die Stapelstellung, weil dann das Eigengewicht ebenfalls noch abgefangen werden muss. Es kommt insbesondere in dieser Stapelstellung zu Schwingungen der Einheit Schwenktisch/Werkzeughälfte, die einen hohen Verschleiß der Bauteile, die diese Kräfte auffangen müssen, mit sich bringen.

Verfahrensmäßig erfolgt bei dieser bekannten Vorrichtung das vertikale Verschieben des Schwenkpunktes bei einem fixen Abstand zwischen Schwenkpunkt und Schwerpunkt. Die Größe des fixen Abstandes ist werkzeugabhängig, angestrebt wird der Abstand Null. Bei diesem Verfahren treten hohe Kräfte in den Endlagen in den antreibenden Bauteilen auf, die die Taktzahl der Vorrichtung beschränken. Die Vorrichtung ist teuer in der Herstellung und einem hohen Verschleiß unterworfen, wenn eine höhere Taktzahl gefahren wird.

Aus der DE 197 10 475 A 1 ist eine Vorrichtung mit einem Schwenktisch bekannt, bei der das vertikale Bewegen und Schwenken des Schwenktisches über Kurvenbahnen erfolgt. Auch hier führt der Bolzen Pos. 4 und damit der Schwenkpunkt eine vertikale Bewegung aus. Der in diesem Schwenkpunkt aufgehängte Schwenktisch hat einen Schwerpunkt, der zum Schwenkpunkt einen fixen, sich während eines Taktes nicht verändernden Abstand aufweist. Der Abstand kann Null sein und ist abhängig vom Werkzeuggewicht. Damit treten im Prinzip die gleichen Probleme auf wie beim Verfahren gemäß DE 33 46 628 C 2.

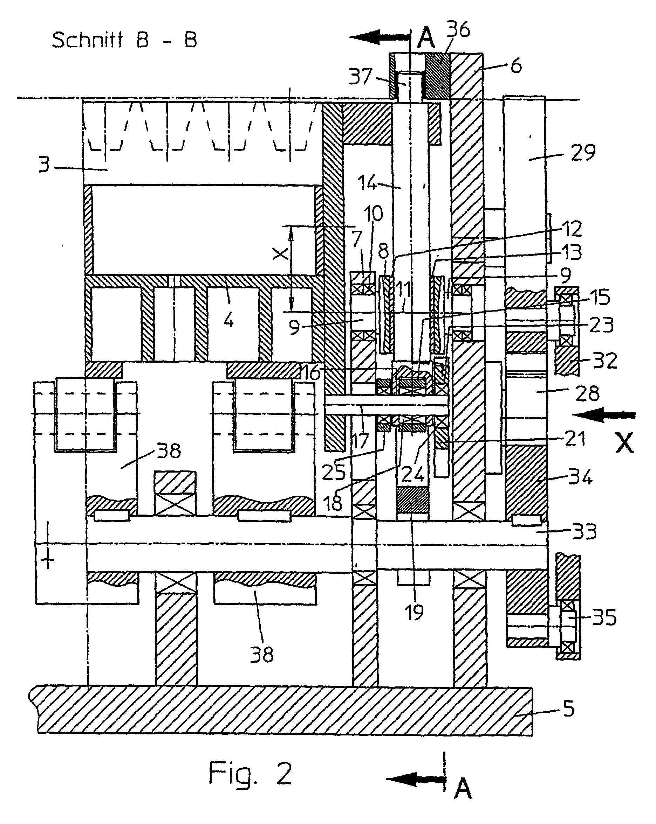

In den Endlagen, insbesondere beim Abkippen, treten hohe Kräfte auf, die die max. Taktzahl der Vorrichtung beschränken. Die Vorrichtung weist aufwendige Kurvenbahnen auf. Das Führen einer Kurvenrolle in einer Nut bringt das prinzipielle Problem mit sich, dass die Drehrichtung der Kurvenrolle abhängig ist davon, an welcher Seite der Nut sie anliegt. Da die Anlageseite wechselt, dreht die Rolle abwechselnd in beide Richtungen, wobei ein Drehrichtungswechsel einen hohen Verschleiß an Nutwandung und Kurvenrolle zur Folge hat, denn es findet in dieser Zeit keine rollende Reibung statt. Man schlägt zur Umgehung dieses Problems den Einbau mehrerer Kurvenrollen pro Nut vor (Figur 2), was aber teuer ist und Probleme bezüglich Steifigkeit mit sich bringt, denn je nach Kurvenbahn muss sich der Abstand der Rollen verändern. Diese sind deshalb gefedert ausgebildet, was aber Schwingungen des Formtisches sehr begünstigt, weil die Kurvenrollen nachgeben können je nach auftretenden Kräften.

Aus der CA 2 240 428 A 1 ist es bekannt, einen Schwenktisch über drei sehr kompliziert gestaltete Kurvenbahnen und drei Kurvenrollen zu bewegen. Ein definierbarer Schwenkmittelpunkt liegt bei einer solchen räumlichen Verschiebung eines Tisches nicht vor, die Bewegungsrichtung des Schwerpunktes des Formtisches verläuft in einer bestimmten Bahn, abhängig von der Gestalt der Kurvenbahnen. Dieses Verfahren des Schwenkens erfordert eine sehr aufwendige, teuere Vorrichtung mit je drei exakt aufeinander abgestimmten, auf beiden Seiten des Schwenktisches angeordneten Kurvenbahnen. Es besteht die Gefahr eines Klemmens der Kurvenrollen in diesem überbestimmten System. Auch hier besteht die Problematik der wechselnden Drehrichtung der Kurvenrollen in den Kurvenbahnen je nach Anlageseite, die ständig wechselt. Verschleiß ist die Folge. Hohe Kräfte auf die Antriebselemente und die Kurvenrollen treten beim Abbremsen der Schwenkbewegung, vor allem beim Anfahren der Stapelstellung, auf.

Der Erfindung liegt die Aufgabe zugrunde, das Verfahren zum Schwenken des Schwenktisches so durchzuführen, dass relativ geringe Massenkräfte beim Anfahren der Endlagen der Schwenkbewegung auftreten und insgesamt eine rasche Schwenkbewegung erfolgen kann, so dass die Vorrichtung mit einer hohen Taktzahl betrieben werden kann. Das Verfahren sollte nur eine einfach gestaltete Vorrichtung ohne aufwendige, komplizierte Kurvenbahnen erfordern. Probleme mit Verschleiß durch Verschieben einer Kurvenrolle in der Nut einer Kurvenbahn mit entsprechend wechselnden Drehrichtungen sollten nicht auftreten.

Diese Aufgabe wird gemäß dem Kennzeichnen des Anspruches 1 dadurch gelöst, dass man einen ortsfesten Schwenkpunkt für den Schwenktisch wählt und den Abstand des Schwerpunktes der Einheit Schwenktisch/Formwerkzeughälfte während des Schwenkens verändert. In den Endlagen der Bewegung ist der Abstand größer, bei der Hälfte des Schwenkwinkels hat dieser Abstand ein Minimum bzw. wird zu Null. Durch diese Veränderung wird erreicht, dass beim Beginn des Schwenkens durch die Reduzierung des Abstandes eine zusätzliche Beschleunigung des Schwenktisches und damit eine Erhöhung der Drehgeschwindigkeit erzielt wird. Entsprechend wird durch die Vergrößerung des Abstandes während der Bremsphase beim Anfahren der Endlagen eine zusätzliche Reduzierung der Drehgeschwindigkeit erzielt, ohne dass hierzu Kräfte von Bauteilen aufgenommen werden müssen. Die von Bauteilen aufzunehmenden Brems- und Beschleunigungskräfte reduzieren sich entsprechend und erlauben eine hohe Taktzahl der Vorrichtung bei geringem Verschleiß. Von Vorteil ist es dabei, wenn sich der Abstand Schwerpunkt/Schwenkpunkt während des Schwenkens kontinuierlich verändert und bei halbem Schwenkwinkel ein Minimum - ggf. bis zum Wert Null - erreicht.

Die Vorrichtung zur Durchführung des Verfahrens ist so gestaltet, dass ein ortsfester Schwenkpunkt vorgesehen ist, zu dem der Schwenktisch mit der auf ihm befestigten Formwerkzeughälfte während des Schwenkens so verschoben werden kann, dass sich der Schwerpunkt auf diesen zu bzw. von ihm weg bewegt. Dadurch müssen die Lager für den Schwenkpunkt lagemäßig nicht verändert werden, was die insgesamt zu bewegenden Massen reduziert.
Eine Weiterbildung der Vorrichtung besteht in einer Unterstützung des Schwenktisches in Schließstellung für das Formen und Stanzen durch seitlich einschwenkbare Stützen. Dies ermöglicht eine relativ leichte Bauweise des Schwenktisches und beim Formen und Stanzen ist trotzdem eine stabile, biegesteife Bauweise gegeben.

Das Verfahren und die Vorrichtung sind anhand der schematischen Zeichnungen näher beschrieben. Es zeigt:
- Figur 1:: eine Seitenansicht der Formstation, teilweise im Schnitt, entlang der Linie A - A in Figur 2.
- Figur 2:: einen Querschnitt durch die Formstation entlang der Linie B - B, Fig. 1
- Figur 3:: einen Querschnitt entlang der Linie C - C in Figur 4
- Figur 4:: eine Vorderansicht der Antriebseinrichtung in Pfeilrichtung X, Figur 2.
- Figur 5: ein Diagramm des Bewegungsablaufes eines Taktes
- Figur 6: eine vergrößerte Darstellung des Hebels Pos. 21

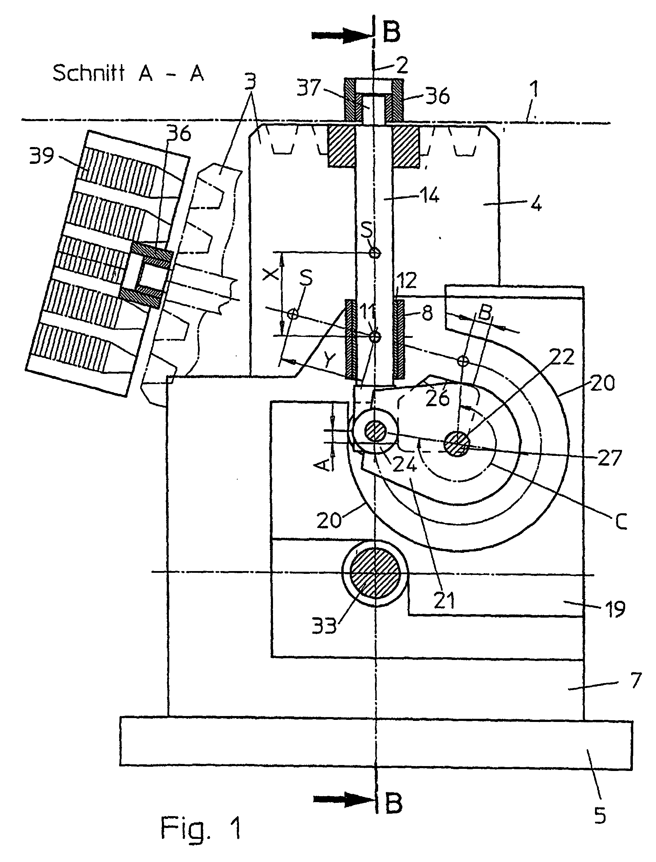

Die Vorrichtung zur Durchführung des Verfahrens weist eine taktweise arbeitende Transporteinrichtung zur abschnittsweisen Zufuhr einer erwärmten Folienbahn 1 auf, die in der Formstation 2, die als kombinierte Form-/Stanzstation ausgebildet ist, mittels Differenzdruck zu Behältern tiefgezogen wird. In dieser Formstation 2 erfolgt das Austrennen der Behälter und das Schwenken des die untere Werkzeughälfte 3 tragenden Schwenktisches 4 vor die Stapelmagazine 39, in die die Behälter aus den Tiefziehformen übergeben werden. Andere Übergabeeinrichtungen, z.B. zum Übergeben der Behälter in ein Palettenband, können an dieser Stelle vorgesehen sein. Um den Bewegungsablauf des Schwenktisches 4 zu erreichen ist in den zum Gestell 5 gehörenden Seitenwangen 6, 7 auf beiden Seiten des Schwenktisches 4 je ein Führungsteil 8 schwenkbar gelagert, wozu es eine Welle mit zwei Zapfen 9 aufweist, die in einem Lager 10 gleiten. Die Wellenachse stellt den Schwenkpunkt 11 für den Schwenktisch 4 dar. Senkrecht zu der Wellenachse ist im Führungsteil 8 eine Bohrung 12 vorgesehen, wobei diese vorzugsweise zu einer eingepressten Lagerbuchse 13 mit Längsführungseigenschaften gehört. In dieser Bohrung 12 gleitet längs verschiebbar je eine Stange 14, die mit dem Schwenktisch 4 starr verbunden ist. Am unteren Ende weist jede Stange 14 eine Ausfräsung 15 und eine Querbohrung 16 auf, so dass an dieser Stelle mittels eines Bolzens 17 eine drehbare Rolle 18 angeordnet werden kann. Diese Rolle 18 steht mit einer Leitbahn 20 in Kontakt, die sich in einer ortsfest am Gestell 5 befestigten Platte 19 befindet. Diese Leitbahn 20 ist vorzugsweise kreisförmig gestaltet, ist also leicht herstellbar. Sie geht über in einen geraden Bereich A und einen geraden Bereich B am Beginn und am Ende der Leitbahn 20 ( siehe Figur 1). Zum Bewegen der Rolle 18 an der Leitbahn 20 entlang dient ein Hebel 21, der um den ortsfesten Drehpunkt 22 um den Winkel C geschwenkt werden kann. (siehe Figur 1). Dazu weist der Hebel 21 eine Aussparung 23 auf, mit der er ein Wälzlager 24 am Außenring umgreift, das auf dem Bolzen 17, der auch die Rolle 18 trägt, sitzt. Die Aussparung 23 ist halbkreisförmig ausgebildet, übergehend in einen Schlitz. ( siehe Figur 6 ). Dies ist deshalb erforderlich, weil in den gerade verlaufenden Bereichen A, B der Leitbahn 20 eine Verschiebung des Wälzlagers 24 relativ zu der Aussparung 23 um einen geringen Betrag erfolgt, die ausgeglichen werden muss. Um in diesen gerade verlaufenden Bereichen A, B trotzdem eine eindeutige Führung des Stangenendes, also der Rolle 18, zu gewährleisten, sitzt auf dem Bolzen 17 eine weitere Rolle 25, die in den gerade verlaufenden Bereichen A, B auf je eine kurze gerade Führungsbahn 26 trifft, die ebenfalls ortsfest am Gestell 5 befestigt ist.

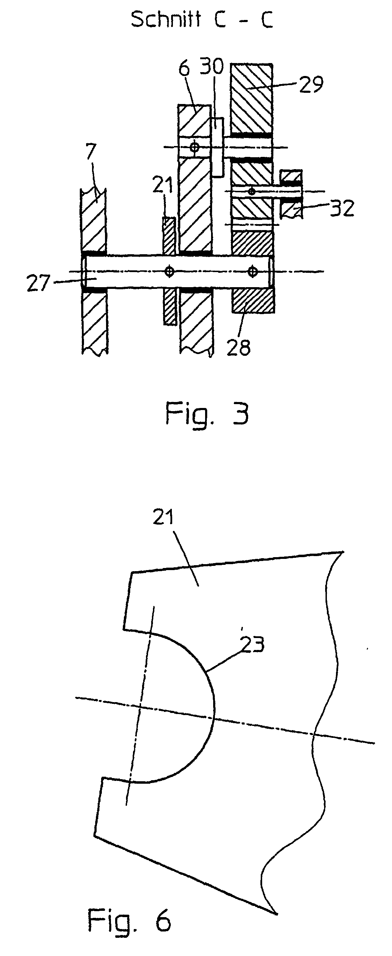

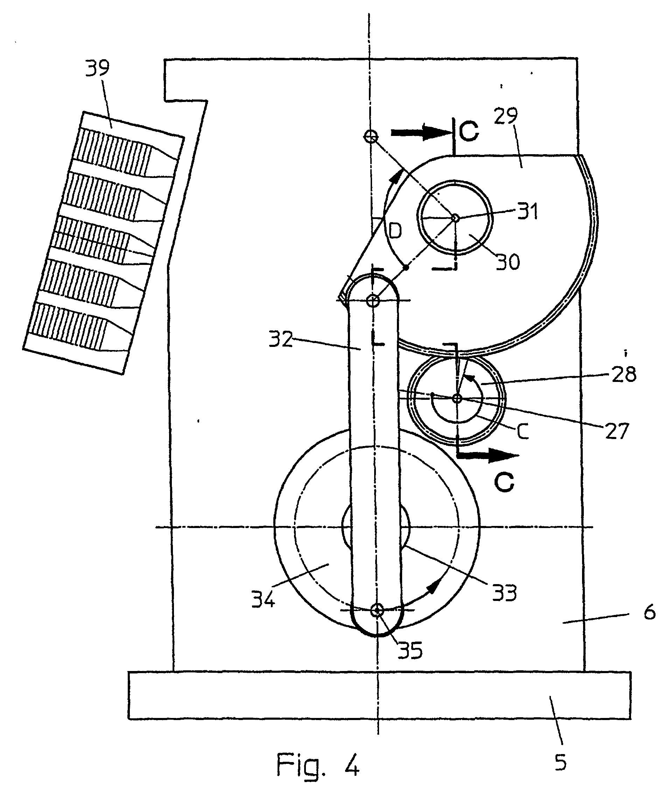

Die Schwenkbewegung des Hebels 21 kann dadurch erfolgen, dass über einen Gleichlauf die Bewegung beider Hebel 21 synchronisiert wird und die Gleichlaufwelle direkt über einen Servomotor angetrieben wird. Eine vorteilhaftere Ausführung ist in den Figuren 2 bis 4 dargestellt. Bei dieser Ausführungsform sitzen die beiden Hebel 21 je auf einem in den Seitenwangen 6,7 gelagerten Bolzen 27, der auch ein Zahnrad 28 trägt. In diesem kämmt je ein Zahnsegment 29, das drehbar auf einem in der Seitenwange 6 gehaltenen Bolzen 30 gelagert ist. Über eine außerhalb des Drehpunktes 31 angelenkte Lasche 32 erfolgt eine Schwenkbewegung des Zahnsegmentes 29 um den Winkel D, die dadurch eine Verdrehung des Hebels 21 bewirkt. Verschoben wird die Lasche 32 von einer Hauptwelle 33 aus, auf der eine Scheibe 34 befestigt ist, an der exzentrisch über den Bolzen 35 die Lasche 32 angelenkt ist.
Auf dieser im Gestell 5 bzw. in den Seitenwannen 6, 7 gelagerten Hauptwelle 33 sitzen gemäß einer Weiterbildung der Erfindung Unterstützungselemente 38, die so angeordnet und ausgebildet sind, dass sie bei hoch geschwenktem Schwenktisch 4, also in Form-/Stanzstellung, den Schwenktisch 4 an einer oder an mehreren Stellen abstützen. Damit können hohe Form- und Stanzkräfte, hervorgerufen durch Zufuhr der Formluft und Absenken des Werkzeugoberteils zur Erzeugung des Stanzhubes gut aufgefangen werden. Durch diese Gestaltung der Vorrichtung ist es möglich, über einen einzigen, auf die Hauptwellen 33 in einer Drehrichtung wirkenden Antrieb - vorzugsweise über einen Servoantrieb - die wechselnde Richtung der Bewegung des Schwenktisches 4 und eine optimale Unterstützung des Schwenktisches 4 zu erzielen.

Als vorteilhaft hat es sich erwiesen, um eine exakte Lage des Schwenktisches 4 in den Endlagen ohne Gefahr von Schwingungen zu gewährleisten, die Stangen 14 während ihrer linearen Verschiebung in den Bereichen A und/oder B zusätzlich zu führen. Am Gestell 5 oder an den Seitenwangen 6 sind dazu Lageraugen 36 angeordnet, in die die Stangen 14 mit ihrem Absatz 37 eintauchen.

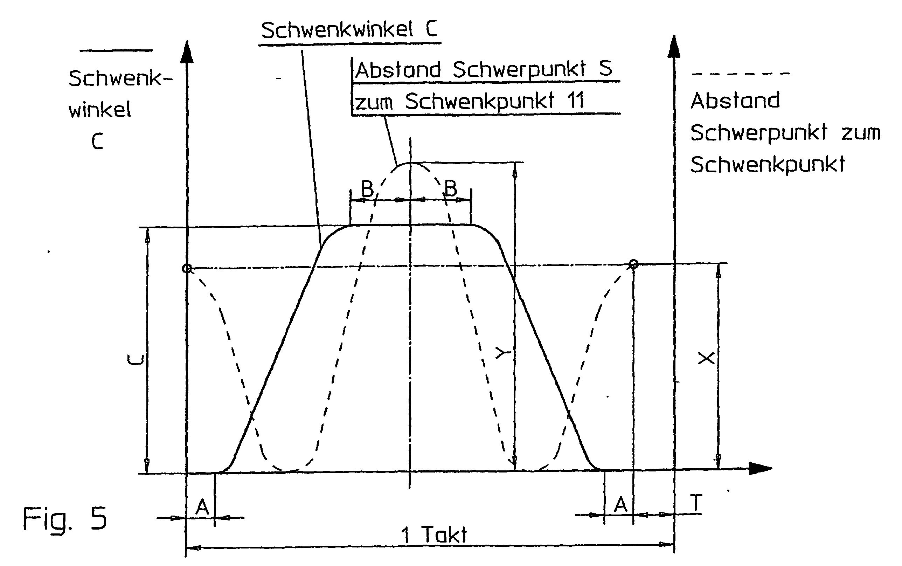

Der Verfahrensablauf der Vorrichtung und die Beziehungen zwischen dem Schwenkwinkel C des Schwenktisches 4 und dem Abstand Schwerpunkt S - Schwenkpunkt 11 sind insbesondere anhand der Figur 5 näher beschrieben. Es wird davon ausgegangen, dass ein Nutzen von Behältern geformt und ausgestanzt ist und der Schwenktisch 4 von der Schließstellung in die Stapelstellung geführt wird. Während des Durchfahrens des geraden Bereiches A der Leitbahn 20 führt der Schwenktisch 4 eine rein vertikale Abwärtsbewegung aus. Er ist dabei ggf. zusätzlich geführt, da der Absatz 37 im Lagerauge 36 gleitet. Der Abstand Schwerpunkt S zum Schwenkpunkt 11 verringert sich, ausgehend von einem Maximalmaß X, auf ein Minimum beim halben Schwenkwinkel C, wobei dieser Abstand größer oder gleich Null sein kann. Während der zweiten Hälfte des Schwenkwinkels C vergrößert sich der Abstand bis zu einem Wert Y bei ganz geschwenktem und über einen linearen Bereich B gerade verschobenen und ggf. geführten Schwenktisch 4. Es ist vorteilhaft, diesen Wert Y größer zu wählen als den Wert X, da der Bremseffekt, hervorgerufen durch Vergrößern dieses Abstandes, beim Schwenken in Stapellage größer sein sollte als beim Anfahren der Schließlage, bedingt durch das nach unten wirkende Gewicht des Schwenktisches 4. Nach dem Ausstoßen der Behälter erfolgt die zweite Hälfte des Arbeitstaktes in umgekehrter Reihenfolge der Bewegungen bis zur Schließstellung. Das heißt, der Abstand Schwerpunkt S - Schwenkpunkt 11 verringert sich zunächst und wird dann wieder größer bis zum Wert X in Schließstellung. In dieser Schließstellung stoppt der Antrieb der Hauptwelle 33 für eine vorgegebene Zeit T, in der die Behälter durch Differenzdruck geformt, abgekühlt und durch eine Hubbewegung des Werkzeugoberteiles ausgestanzt werden.

Wie man aus dem Diagramm in Figur 5 ersehen kann verändert sich der Abstand Schwerpunkt S - Schwenkpunkt 11 kontinuierlich bis auf die Ruhezeit T, in der keine Veränderung stattfindet. Dies hat einen ruhigen Bewegungsablauf der Vorrichtung zur Folge und erlaubt eine einfache, kreisförmige Gestaltung der Leitbahn 20.

## Patentansprüche

1. Verfahren zum Bewegen eines Schwenktisches (4), der eine Hälfte des Formwerkzeuges (3) trägt, in einer Vorrichtung zum Formen und Ausstanzen von Behältern aus einer thermoplastischen Kunststofffolie mittels Differenzdruck, wobei der Schwenktisch (3) zwischen einer Schließstellung zum Formen und Ausstanzen und einer Stapelstellung zum Auswerfen der Behälter geschwenkt wird und der Schwerpunkt der Einheit Schwenktisch (4) mit Formwerkzeughälfte (3) in den Endlagen außerhalb des Schwenkpunktes (11) liegt, um den diese Einheit geschwenkt wird, **dadurch gekennzeichnet, dass** während des Schwenkens des Schwenktisches (4) um einen Schwenkwinkel (C) der Abstand Schwerpunkt (S) - Schwenkpunkt (11) zunächst reduziert und nach der Hälfte des Schwenkwinkels (C) wieder vergrößert wird.

2. Verfahren nach Anspruch 1 **dadurch gekennzeichnet, dass** die Veränderung des Abstandes Schwerpunkt (S) - Schwenkmittelpunkt (11) während der Bewegung des Schwenktisches (4) kontinuierlich erfolgt.

3. Verfahren nach Anspruch 1 oder 2 **dadurch gekennzeichnet, dass** der minimale Abstand zwischen Schwerpunkt (S) und Schwenkpunkt (11) bei der Hälfte des Schwenkwinkels (C) erreicht ist.

4. Verfahren nach einem der Ansprüche 1 bis 3 **dadurch gekennzeichnet dass** der Abstand zwischen Schwerpunkt (S) und Schwenkpunkt (11) den Wert Null erreicht.

5. Verfahren nach einem der Ansprüche 1 bis 4 **dadurch gekennzeichnet dass** der Abstand (X,Y) Schwerpunkt (S) - Schwenkpunkt (11) in Schließstellung des Schwenktisches (4) und in Stapelstellung gleich ist.

6. Verfahren nach einem der Ansprüche 1 bis 4 **dadurch gekennzeichnet, dass** der Abstand (X,Y) Schwerpunkt (S) - Schwenkpunkt (11) in Schließstellung des Schwenktisches (4) und in Stapelstellung unterschiedlich ist.

7. Verfahren nach einem der Ansprüche 1 bis 4 **dadurch gekennzeichnet, dass** der Abstand (Y) Schwerpunkt (S) - Schwenkpunkt (11) in Stapelstellung des Schwenktisches (4) größer ist als der Abstand (X) in Schließstellung.

8. Verfahren nach einem der Ansprüche 1 bis 7 **dadurch gekennzeichnet, dass** der Schwenktisch (4) beim Anfahren der Schließstellung und/oder der Stapelstellung zusätzlich geführt wird.

9. Verfahren nach einem der Ansprüche 1 bis 8 **dadurch gekennzeichnet, dass** der Schwenktisch (4) in Schließstellung von unten zusätzlich unterstützt wird.

10. Vorrichtung zum Formen und Ausstanzen von Behältern aus einer thermoplastischen Kunststofffolie mit einer Formstation und einem Formwerkzeug, wobei eine Formwerkzeughälfte auf einem Schwenktisch angeordnet ist, **gekennzeichnet durch** folgende Merkmale:
a) am Schwenktisch (4) ist beiderseits je eine Stange (14) befestigt.
b) beide Stangen (14) gleiten in je einem ortsfesten, um einen Schwenkpunkt (11) schwenkbaren Führungsteil (8).
c) an ihrem der Folienbahn (1) abgewandten Ende trägt jede Stange (14) eine Rolle (18).
d) diese Rolle (18) steht in Anlage mit einer ortsfesten Leitbahn (20)
e) einen an jeder Stange (14) angreifenden Hebel (21) zum Führen der Rolle (18) entlang der Leitbahn (20).

11. Vorrichtung nach Anspruch 10 **dadurch gekennzeichnet, dass** die Leitbahn (20) kreisförmig gestaltet ist und der Drehpunkt (22) des Hebels (21) im Mittelpunkt der kreisförmigen Leitbahn (20) angeordnet ist.

12. Vorrichtung nach Anspruch 10 oder 11 **dadurch gekennzeichnet, dass** die Leitbahn (20) an einem oder an beiden Endbereichen einen gerade verlaufenden Bereich (A, B) aufweist.

13. Vorrichtung nach einem der Anspruch 12 **gekennzeichnet durch** eine ortsfeste Führungsbahn (26) zur Führung jeder Stange (14) beim Durchfahren des gerade verlaufenden Bereiches (A,B).

14. Vorrichtung nach Anspruch 13 **dadurch gekennzeichnet, dass** die Führung der Stangen (14) im gerade verlaufenden Bereich (A,B). über eine Rolle (25) erfolgt, die auf demselben Bolzen (17) wie die auf der Leitbahn (20) geführte Rolle (18) sitzt.

15. Vorrichtung nach einem der Ansprüche 10 bis 14 **dadurch gekennzeichnet, dass** die Schwenkbewegung der Hebel (21) durch eine Kopplung mit einer angetriebenen Hauptwelle (33) erfolgt.

16. Vorrichtung nach Anspruch 15 **dadurch gekennzeichnet, dass** die Hauptwelle (33) eine Scheibe (34) trägt, an der exzentrisch eine Lasche (32) angeordnet ist, die mit einem ortsfest gelagerten Zahnsegment (29) in Verbindung steht, wobei das Zahnsegment (29) ein auf dem Bolzen (27) befestigtes Zahnrad (28) antreibt, der auch den Hebel (21) trägt.

17. Vorrichtung nach Anspruch 15 oder 16 **dadurch gekennzeichnet, dass** auf der Hauptwelle (33) Unterstützungselemente (38) angeordnet und so ausgebildet sind, dass sie den in Schließstellung bewegten Schwenktisch (4) an einer oder mehreren Stellen abstützen.

## Claims

1. Method of moving a pivot table (4), which carries half of the mould tool (3), in a device for moulding and punching out containers from a thermoplastic synthetic material film by means of differential pressure, wherein the pivot table (3) is pivoted between a closed setting for moulding and punching out and a stacking setting for ejection of the containers and the centre of gravity of the unit of pivot table (4) with mould tool halves (3) lies, in the end positions, outside the fulcrum (11) about which this unit is pivoted, **characterised in that** during the pivotation of the pivot table (4) about a pivot angle (C) the spacing of centre of gravity (S) to fulcrum (11) is initially reduced and is increased after half the pivot angle (C).

2. Method according to claim 1, **characterised in that** the change in the spacing of centre of gravity (S) to fulcrum (11) takes place continuously during the movement of the pivot table (4).

3. Method according to claim 1 or 2, **characterised in that** the minimum spacing between centre of gravity (S) and fulcrum (11) is reached at half the pivot angle (C).

4. Method according to one of claims 1 to 3, **characterised in that** the spacing between centre of gravity (S) and fulcrum (11) reaches the value zero.

5. Method according to one of claims 1 to 4, **characterised in that** the spacing (X, Y) of centre of gravity (S) to fulcrum (11) in the closed setting of the pivot table (4) and in the stacking setting is the same.

6. Method according to one of claims 1 to 4, **characterised in that** the spacing (X, Y) of centre of gravity (S) to fulcrum (11) in the closed setting of the pivot table (4) and in the stacking setting is different.

7. Method according to one of claims 1 to 4, **characterised in that** the spacing (Y) of centre of gravity (S) to fulcrum (11) in the stacking setting of the pivot table (4) is greater than the spacing (X) in the closed setting.

8. Method according to one of claims 1 to 7, **characterised in that** the pivot table (4) is additionally guided when moving to the closed setting and/or the stacking setting.

9. Method according to one of claims 1 to 8, **characterised in that** the pivot table (4) in the closed setting is additionally supported from below.

10. Device for moulding and punching out containers from a thermoplastic synthetic material film, comprising a moulding station and a mould tool, wherein one mould tool half is arranged on a pivot table, **characterised by** the following features:
a) a respective rod (14) is fastened at each of the two sides of the pivot table,
b) the two rods (14) each slide in a respective guide part (8) disposed at a fixed location and pivotable about a fulcrum (11),
c) each rod (14) carries a roller (18) at its end remote from the foil path (1),
d) this roller (18) is disposed in contact with a stationary guide path (20) and
e) a lever (21), which engages each rod (14), for guiding the roller along the guide path (20).

11. Device according to claim 10, **characterised in that** the guide path (20) is formed to be circular and the fulcrum (22) of the lever (21) is arranged at the centre point of the circular guide path (20).

12. Device according to claim 10 or 11, **characterised in that** the guide path (20) has a rectilinearly extending region (A, B) at one end region or at both end regions.

13. Device according to one of claim 12, **characterised by** a stationary guide path (26) for guiding each rod (14) during movement through the rectilinearly extending region (A, B).

14. Device according to claim 13, **characterised in that** the guide of the rods (14) in the rectilinearly extending region (A, B) is effected by way of a roller (25) which is seated on the same pin (17) as the roller (18) guided on the guide path (20).

15. Device according to one of claims 10 to 14, **characterised in that** the pivot movement of the lever (21) is effected by a coupling with a drive main shaft (33).

16. Device according to claim 15, **characterised in that** the main shaft (33) carries a disc (34) at which a strap (32) connected with a toothed segment (29) mounted in stationary position is eccentrically arranged, wherein the toothed segment (29) drives a gearwheel (28) which is fastened to the pin (27) and which also carries the lever (21).

17. Device according to claim 15 or 16, **characterised in that** support elements (38) are arranged on the main shaft (33) and so constructed that they support the pivot table (4), which is moved into closed setting, at one or more places.

## Revendications

1. Procédé pour entraîner une table basculante (4) portant la moitié d'un outil de formage (3) dans un dispositif de formage et de découpage de récipients moulés à partir d'une feuille thermoplastique par une différence de pression, la table basculante (3) étant mobile entre une position de fermeture pour le formage et le découpage et une position d'empilage pour éjecter le récipient, le centre de gravité de l'ensemble formé par la table (4) et la moitié de l'outil de formage (3) se situant dans les positions terminales, au-delà du point de basculement (11) autour duquel cet ensemble est basculé,
**caractérisé en ce que**
pendant le basculement de la table basculante (4) d'un angle de basculement (C) la distance entre le centre de gravité (S) et le point de basculement (11) diminue tout d'abord et après avoir parcouru la moitié de l'angle de basculement (C) cette distance augmente de nouveau.

2. Procédé selon la revendication 1,
**caractérisé en ce que**
la variation de la distance entre le centre de gravité (S) et le point de basculement (11) est une variation continue pendant le mouvement de la table basculante (4).

3. Procédé selon l'une quelconque des revendications 1 ou 2,
**caractérisé en ce que**
la distance minimale entre le centre de gravité (S) et le point de basculement (11) correspond au demi-angle de basculement (C).

4. Procédé selon l'une quelconque des revendications 1 à 3,
**caractérisé en ce que**
la distance entre le centre de gravité (S) et le point de basculement (11) atteint la valeur zéro.

5. Procédé selon l'une quelconque des revendications 1 à 4,
**caractérisé en ce que**
la distance (X, Y) entre le centre de gravité (S) et le point d'articulation (11) est la même en position de fermeture et en position d'empilage de la table basculante (4).

6. Procédé selon l'une quelconque des revendications 1 à 4,
**caractérisé en ce que**
la distance (X, Y) entre le centre de gravité (S) et le point de basculement (11) est différente en position de fermeture et en position d'empilage de la table basculante (4).

7. Procédé selon l'une quelconque des revendications 1 à 4,
**caractérisé en ce que**
la distance (Y) entre le centre de gravité (S) et le point de basculement (11) en position d'empilage de la table basculante (4) est plus grande que la distance (X) de la table en position de fermeture.

8. Procédé selon l'une quelconque des revendications 1 à 7,
**caractérisé en ce que**
la table basculante (4) est guidée de manière complémentaire lorsqu'elle se rapproche de sa position de fermeture et/ou de sa position d'empilage.

9. Procédé selon l'une quelconque des revendications 1 à 8,
**caractérisé en ce que**
la table basculante (4) est soutenue en plus par en dessous en position de fermeture.

10. Dispositif pour le formage et le découpage de récipients à partir d'une feuille thermoplastique comportant un poste de formage et un outil de formage dont une moitié est installée sur une table basculante,
**caractérisé en ce que** :
a) de part et d'autre de la table basculante (4) est fixée une barre (14),
b) les deux barres (14) glissent chacune dans une partie de guidage (8) fixe, basculante autour d'un point de basculement (11),
c) chaque barre (14) porte un galet (18) à son extrémité opposée à la bande de film,
d) ce galet (18) est en appui contre un chemin de guidage fixe (20),
e) un levier (21) agissant sur chaque barre (14) pour guider le galet (18) le long du chemin de guidage (20).

11. Dispositif selon la revendication 10,
**caractérisé en ce que**
le chemin de guidage (20) a une forme circulaire et le point de rotation (22) du levier (21) se trouve au centre du chemin de guidage circulaire (20).

12. Dispositif selon l'une quelconque des revendications 10 ou 11,
**caractérisé en ce que**
le chemin de guidage (20) présente une zone droite (A, B) à l'une ou à ses deux extrémités.

13. Dispositif selon la revendication 12,
**caractérisé par**
un chemin de guidage fixe (26) pour guider chaque barre (14) lors du passage de la zone droite (A, B).

14. Dispositif selon la revendication 13,
**caractérisé en ce que**
le guidage des barres (14) dans la zone droite (A, B) se fait par un galet (25) porté par le même axe (17) que le galet (18) guidé par le chemin de guidage (20).

15. Dispositif selon l'une quelconque des revendications 10 à 14,
**caractérisé en ce que**
le mouvement de basculement des leviers (21) est assuré par un couplage avec un arbre principal (33), entraîné.

16. Dispositif selon la revendication 15,
**caractérisé en ce que**
l'arbre principal (33) porte un disque (34) muni de manière excentrée d'une patte (32) reliée à un segment denté (29) monté fixe, le segment denté (29) entraînant une roue dentée (28) fixée sur l'axe (27) qui porte également le levier (21).

17. Dispositif selon l'une quelconque des revendications 15 ou 16,
**caractérisé par**
des éléments de support (38) portés par l'arbre principal (33), ces éléments étant réalisés pour soutenir en un ou plusieurs endroits la table basculante (4) en position de fermeture.
